# EUROPEAN PATENT SPECIFICATION

(11) **EP 1 804 487 B1**
(45) Date of publication and mention of the grant of the patent: **07.12.2016**
(21) Application number: 06127195.3
(22) Date of filing: 27.12.2006
(51) Int. Cl.: H04N 5/44, H04N 5/445

(54) **Method for the management of pop up windows displayed on user screen in television environment**
Verfahren zur Verwaltung von auf dem Benutzerbildschirm eingeblendeten Fenstern in einer Fernsehumgebung
Procédé de gestion de fenêtres d'incrustations affichées sur l'écran utilisateur dans un environnement de télévision

(30) Priority: 28.12.2005 KR 20050131219
(43) Date of publication of application: 04.07.2007
(73) Proprietor: Alticast Corporation, Seoul 06655 (KR)
(72) Inventor: Kim, Bo Kyung, 138-170 Seoul (KR)
(74) Representative: Zardi, Marco

(56) References cited:
- EP-A- 0 247 827
- US-A1- 2002 042 920

## Description

### TECHNICAL FIELD OF THE INVENTION

The present invention relates to a method for the management of pop-up windows displayed on a user screen in a television environment.

### BACKGROUND OF THE INVENTION

As various applications are provided through electronic terminals, efficient construction of user interfaces is becoming more and more important. For the simplification of the user interfaces, pop-up windows are being widely used.

In a computer environment, various platforms and user terminals make it possible to utilize multi-windows system. In the computer environment, the most important input devices are a mouse and a keyboard. Even two or more pop-up windows are provided on the user screen, a particular pop-up window to be wanted can be focused using the mouse for key inputs. For more detailed information on the management of pop-up windows in the computer environment, please refer to U.S. Patent Nos. 5,742,788 and 6,160,554, and references incorporated therein. EP 0 247 827 A discloses a display unit which displays a desired number of windows on its display screen according to their given priority, allowing the windows to overlap one another. However, the mouse and the keyboard are not common in a television environment. To the contrary, a remote control is generally used to control the applications in the television environment. A minimum set of input events is defined on the remote control. Specifically, 4 color keys, 4 directional keys, numeric keys 0 to 9, OK key and some other keys are defined. This allows a limited user interaction. Sometimes, it is not easy to change a focus from one pop-up window to another pop-up window using the remote control. Accordingly, an effective management of pop-up windows that are displayed on the user screen by one or more applications is being demanded in the television. Since the television environment has limited screen size, it is almost impossible to display multiple windows in one screen. That is to say, even though there are multiple active popup windows, users can see only one popup window, and the shown popup window shall have the focus unless invisible popup window will respond to user's input unexpectedly.

Conventionally, conflicts of key inputs of the television environment have been solved at a runtime, for example, using org.davic.net.resource package defined in MHP (Multimedia Home Platform) specification and org.ocap.resource package defined in OCAP (Open Cable Application Platform) specification. With org.davic.net.resource model, applications can compete keys at a run-time with very limited information. In the OCAP model, there is global manager named Monitor application in addition to MHP resource model. Monitor application can manage layering and key handling. However, the information given to the Monitor application is not sufficient to handle the conflicts. Monitor application can know the application information, but it can not know the popup information. Even though the popup information is added, Monitor application shall be updated whenever new popup window is created. It can be make serious application dependency. Neither MHP nor OCAP does handle the issue of key event, Focus, and Layering issue at the same time. In MHP and OCAP, there is "user event" for the usage of hot key. Windows layering and key focusing can be handled using the existing method, but the existing method do not consider the "user event" at the same time. So, invisible applications can steal keys although there is visible popup window.

### SUMMARY OF THE INVENTION

An object of the present invention is to provide an effective method for the management of pop-up windows displayed on a user screen in a television environment. More particularly, the pop-up window management method according to the present invention aims at solving the problem of layering and focusing of pop-up windows at a design time, rather than at a runtime.

The invention is defined by the appended claims.

The pop-up window management method according to the present invention assigns a priority to each of pop-up windows and is characterized in that to each of pop-up windows a key handler is further assigned and when two or more pop-up windows are displayed on the user screen calling the key handler of the pop-up window with higher priority, and processing a key input from a user based on the called key handler.

According to a preferred embodiment of the present invention, the method further comprises when an application to be currently executed retrieves a certain pop-up window from a user interface manager, registering the priority and the key handler assigned to the pop-up window to be retrieved.

According to another preferred embodiment of the present invention, there is provided a method for the management of pop-up windows displayed on a user screen in a television environment, characterized in that layering of the pop-up windows to be displayed on the user screen is also managed based on the priority under control of a user interface manager.

### BRIEF DESCRIPTION OF THE DRAWINGS

Fig. 1 is a flowchart illustrating a preferred embodiment of the method for the management of pop-up windows displayed on a user screen in a television environment, in accordance with the present invention.
Fig. 2 is a block diagram illustrating an exemplary embodiment of the assignment of a priority and a key handler to each of a plurality of pop-up windows.
Fig. 3 is a user interface illustrating a specific embodiment of the method for the management of pop-up windows displayed on a user screen in a television environment, in accordance with the present invention, wherein (a) depicts a user interface in which a reservation pop-up window is displayed on the user screen when reservation time has been reached and (b) depicts a user interface in which a PIN code input pop-up window is displayed along with the program reservation pop-up window on the user screen.
Fig. 4 is a pop-up window management table illustrating a specific embodiment of the priority and the key handler assigned to each of a plurality of pop-up windows.

### DETAILED DESCRIPTION OF THE INVENTION

In this description, the term "pop-up window" refers to a window prompting user key input. As events occur from various applications, a pop-up window corresponding to each event is displayed. The pop-up window may be a full screen or a portion of the screen. Typically, the pop-up window has rectangular shape and represents a bordered region. Sometimes, a message that does not require any user key input (for example, a message providing a current status, "Now recording of program XXX is processing") can be provided as a pop-up window. Such a pop-up window does not require any key input such that conflict with another pop-up window is not involved with the key input. In this case, a key handler may not be assigned to the pop-up window.

In this description, the term "priority" refers to a value that determines ranking of one pop-up window over the other pop-up window. The priority may be expressed in numbers or alphabets. For the purpose of simple understanding, the priority is expressed in number in this description. The larger number has the higher priority.

In this description, the term "key handler" refers to a function by which the processing pattern of the key input from the user is defined. For example, the key handler is referred as a function that determines whether a key input from the user is to be consumed by a particular pop-up window or to be bypassed and shared with other application. Herein, the consumption may include both the acceptance and ignorance of the key input. The key handler may be suitably defined depending upon the kind of the pop-up window, the type of required key input, the type of pop-up windows to be displayed together, etc.

In this description, the term "user interface manager" (briefly, "UImanager") refers to an entity that manages a user interface. Usually, the user interface manager is included as part of a middleware. Various applications retrieve pop-up windows corresponding to particular events from the user interface manager. The position of the pop-up windows to be posted on the user screen is managed by the user interface manager. Preferably, the user interface manager receives and maintains the priorities and the key handlers of the pop-up windows to be retrieved from various applications.

In this description, the term "middleware" refers to a software layer located between an operating system and the applications. With aid of the middleware, various applications can be executed independently of hardware or the operating system.

Hereinafter, the present invention will be more fully illustrated referring to the accompanying drawings.

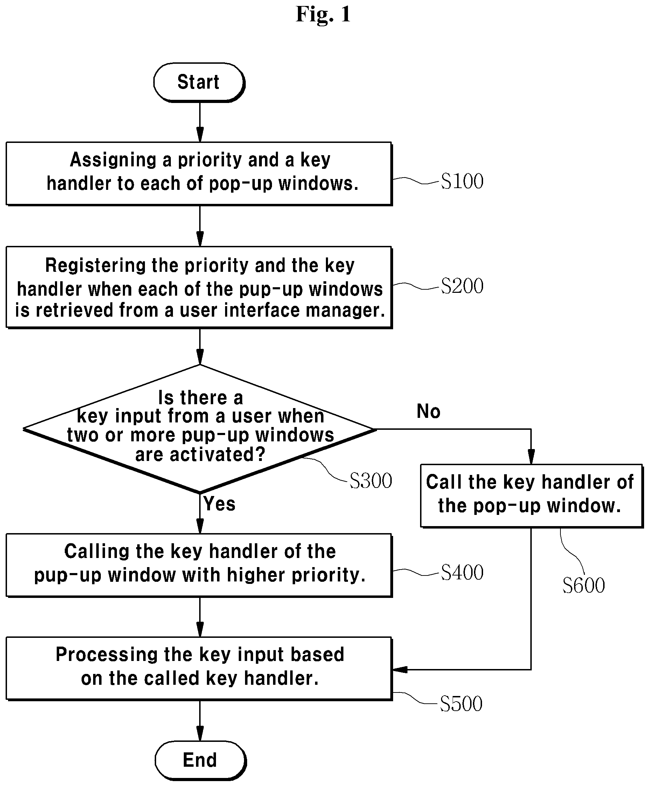

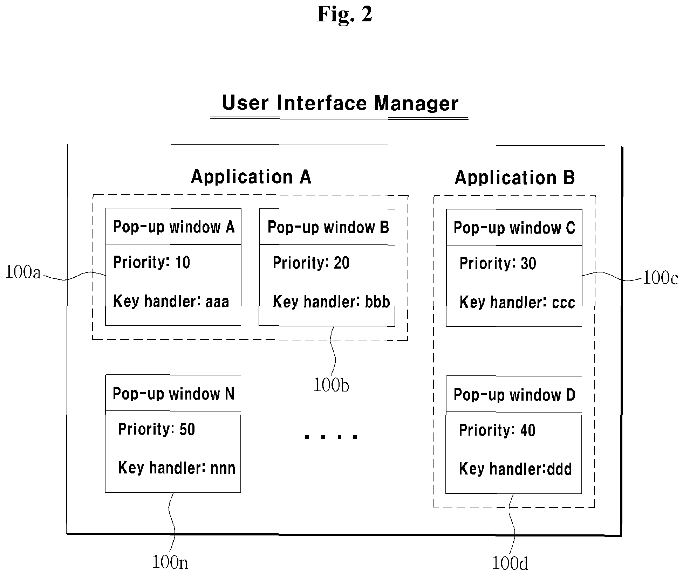

Fig. 1 is a flowchart illustrating a preferred embodiment of the method for the management of pop-up windows displayed on a user screen in a television environment, in accordance with the present invention. And, Fig. 2 is a block diagram illustrating an exemplary embodiment of the assignment of a priority and a key handler to each of a plurality of pop-up windows.

As shown in Fig. 1, a priority is assigned to each of pop-up windows and a key handler is defined thereto **(S100).** Referring to Fig. 2, a pop-up window A **100a** has a priority "10" and a pop-up window B **100b** has a priority "20". For the convenience of understanding, the pop-up window with larger number has higher priority in this description. Accordingly, the pop-up window B **100b** has higher priority than the pop-up window A **100a.** Further, priorities "30", "40" and "50" were respectively assigned to pop-up windows C **100c,** D **100d** and N **100n.** Further, each of the pop-up windows **100a, 100b, 100c** ... **100n,** total **"100"** has a key handler. The key handler determine whether a key input from the user through manipulation of the input device (generally, the remote control) is to be accepted by each of the pop-up windows **100** or it will be bypassed and shared with other applications.

Suppose that the pop-up windows A, B and C **100a, 100b** and **100c** are activated and posted on the user screen. In this case, the pop-up windows A **100a,** B **100b** and C **100c** may be posted by a single application or by combination of two or more applications. Referring to Fig. 2, the pop-up windows A **100a** and B **100b** are used by an application A, and the pop-up windows C **100c** and D **100d** are used by an application B. Thus, if an event A and an event B occur from the application A and an event C occurs from the application B, the pop-up windows A **100a,** B **100b** and C **100c** will be displayed on the user interface sequentially or simultaneously.

When a particular application to be executed retrieves a pop-up window from the user interface manager, the priority and the key handler assigned to the pop-up window are registered **(S200).** In the above example, when the pop-up windows A **100a,** B **100b** and C **100c** are retrieved from the user interface manager, the priorities "10", "20" and "30" of the pop-up window A **100a,** B **100b** and C **100c,** and the key handlers "aaa", "bbb" and "ccc" are registered, preferably, to the user interface manager.

When a key input is received from a user in a situation that two or more pop-up windows are being displayed on the user screen **(S300),** the key handler of the pop-up window with higher priority is called **(S400)** and the user key input is processed based on the called key handler **(S500).** In other words, the pop-up window with higher priority has a preferential right to consume the key input from the user. Specifically, in a case that a user key input is received when the pop-up windows A **100a,** B **100b** and C **100c** are displayed on the user screen, the pop-up window C **100c** with the highest priority consumes the key input and the key input is processed based on the key handler "ccc" of the pop-up window C **100c.** For example, the key handler "ccc" may be set as follows: numeric key → accepted; channel up/down key, power key → bypassed; and other keys → ignored. In this case, if the user inputs a numeric key, the input value is accepted by the key handler "ccc". In other words, the key input value is accepted by the pop-up window C **100c** and blocked such that the input value cannot be used by other applications. That is, the key input from the user is consumed by the pop-up window C **100c.** To the contrary, when a channel up/down key or a power key is pressed, the input value is bypassed by the pop-up window C **100c** and will be shared with other applications. An application responsible for the channel up/down or power off event will accept the key input, and execute the event. When other keys are input, the input value is ignored. If only one pop-up window is displayed on the user screen in the step **S300,** the key handler of the pop-up window is directly called **(S600)** and the user key input is processed based on the called key handler **(S500).**

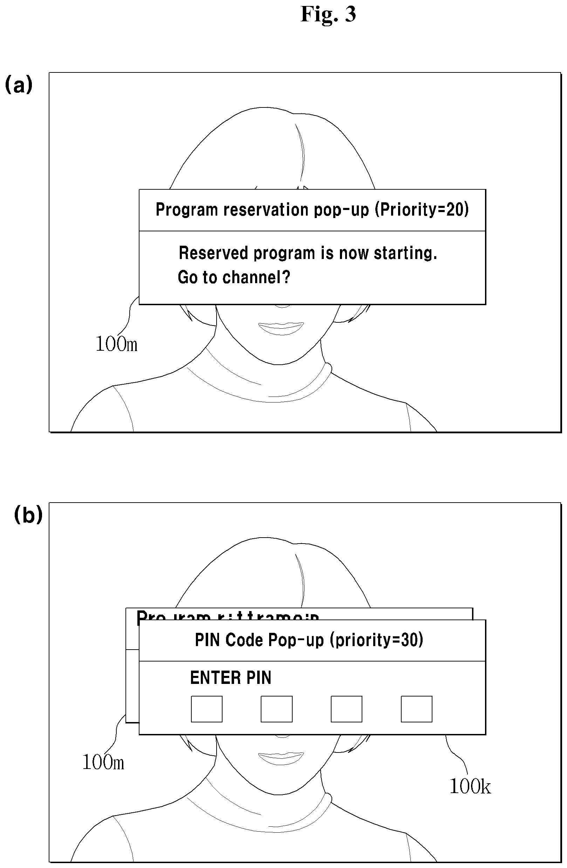

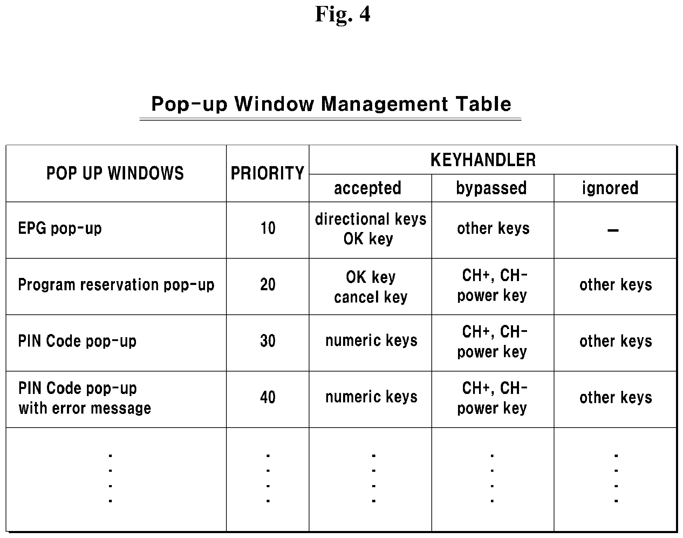

Specific example of the method for the management of pop-up windows according to the present invention is as follows. Suppose that a reservation time for a particular program that was previously reserved has been reached. When the reservation time arrives, a pop-up window asking if the user wants to move to the corresponding channel will be retrieved and displayed on the user screen. Fig. 3(a) is a user interface illustrating the specific example of a pop-up window displayed on the user screen when the reservation time has been reached. As shown in Fig. 3(a), the pop-up window **100m** provides a message prompting a key input to move to the reserved channel. Referring to the pop-up window management table of Fig. 4, the program reservation pop-up window **100m** has been given with the priority "20". And, the key handler is set as "OK and cancel keys → accepted; channel up/down key, power key → bypassed; other keys → ignored." Accordingly, an OK key input from the remote control leads to changing to the reserved channel and a cancel key input inactivates the pop-up window. And, if the channel up/down key or power key is pressed, the input value is bypassed and shared with other application. Channel up/down or power off is executed by an application responsible for the channel up/down or power off event. When other keys are input, the input value is ignored.

Suppose that the user presses a "channel up key (CH+)" of the input device when the program reservation pop-up window **100m** is displayed on the user screen. Referring to the key handler of the program reservation pop-up window **100m** of Fig. 4, the key input (CH+) from the user is bypassed by the program reservation pop-up window **100m** and shared with other application such as TV watching (WatchTV) application, and the TV watching application will executes the channel up event. In this situation, the next channel may be a parental control channel, e.g. X-rated channel. In this case, a pop-up window **100k** that prompts input of a PIN (personal identification number) code will be displayed on the user screen, along with the program reservation pop-up window **100m.** Fig. 3(b) depicts a user interface in which a PIN code input pop-up window **100k** is displayed along with the program reservation pop-up window **100m** on the user screen. Referring to the pop-up window management table of Fig. 4, the PIN code input pop-up window **100k** has a priority "30" and the key handler is set as "numeric keys → accepted; channel up/down key, power key → bypassed; other keys → ignored."

If there is a user key input when the two pop-up windows, the program reservation pop-up window **100m** and the PIN code input pop-up window **100k,** are displayed on the user screen, the PIN code input pop-up window **100k** with higher priority has an preferential right for consuming the user key input. Thus, if the user presses a numeric key and then the "OK" key, the key handler of the PIN code input pop-up window **100k** is called and the user key input is processed based on the called key handler. Since numeric keys are set as "accepted", the user key input is accepted by the PIN code input pop-up window **100k.** Subsequently, if the user key input matches with the pre-set PIN code, the parental control is lifted and the corresponding channel is displayed. Simultaneously, the PIN code input pop-up window **100k** disappears from the screen. In contrast, if the user key input does not coincide with the pre-set PIN code, a pop-up window prompting re-input of the PIN code (not illustrated in the figure) will be displayed along with an error message, replacing the PIN code input pop-up window **100k.**

The layering of the two pop-up windows, the program reservation pop-up window **100m** and the PIN code input pop-up window **100k,** on the screen is managed by the user interface manager (UImanager). Fig. 3(b) illustrates that the two pop-up windows **100m** and **100k** are partially overlapped. But, they may be completely overlapped. When two or more pop-up windows are displayed on the user screen, it is preferable that the pop-up window with higher priority is completely overlapped over the pop-up window with lower priority, for the user's convenience. In other words, it is preferable that the layering order of the pop-up windows is also determined based on the priority assigned to each of pop-up windows.

The pop-up window management method of the present invention provides the following advantages.
(1) The pop-up window management method of the present invention makes it possible to solve the problem of layering and focusing at design time when a plurality of pop-up windows are activated. For example, when a PIN code input pop-up window for parental control and a smart card error pop-up window are activated at the same time, it enables the determination of which pop-up window will take a preferential right to consume the key input at a design time.
(2) The conventional pop-up window management method solves conflict at a runtime by assigning priorities to applications. But, it cannot solve the problem when several pop-up windows are created by a single application. According to the pop-up window management method of the present invention, each of pop-up windows has a unique priority and is managed based on the given priority. Therefore, the pop-up window management method of the present invention avoids such a problem.
(3) The key input of the user is consumed by a pop-up window based on the priority and the consumed key input is not utilized as user event by other application. Accordingly, the management of pop-up windows can be effectively performed without modifying existing application codes.

As described, it should be evident that the present invention can be implemented through a variety of configurations in the aforementioned technical field without affecting, influencing or changing the scope of the present invention. Therefore, it is to be understood that the examples and applications illustrated herein are intended to be in the nature of description rather than of limitation. Furthermore, the meaning, scope and higher conceptual understandings of the present invention as well as modifications and variations thereof that arise therefrom should be understood to be extensions of this invention.

## Claims

1. A method for the management of pop-up windows displayed on a user screen in a television, comprising:
providing a television set with a user screen;
providing an input device to the television set;
assigning a priority and a key handler for defining a processing pattern of a key input to each of pop-up windows (S100) at a design time,
wherein the priority means a value that determines ranking of one pop-up window over the other pop-up window, a pop-up window with higher priority has a preferential right for consuming a key input.
followed by the steps of:
retrieving a certain pop-up window from a user interface manager by an application to be currently executed, and
when a key input is received from a user via an input device to the television set (S300) in a situation that two or more pop-up windows are displayed on the user screen, calling the key handler of the pop-up window with higher priority based on the priority of the two or more pop-up windows (S400), and
processing a key input from a user based on the called key handler (S500),
wherein layering of the pop-up windows to be displayed on the user screen is managed based on the priority under control of the user interface manager.

## Patentansprüche

1. Verfahren für die Verwaltung von Pöp-up-Fenstern, die auf einem Benutzerbildschirm in einer Fernseheinrichtung angezeigt werden, umfassend:
Bereitstellen eines Fernsehgeräts mit einem Benutzerbildschirm;
Bereitstellen einer Eingabevorrichtung für das Fernsehgerät;
Zuordnen einer Priorität und eines Tasten-Handlers zum Definieren eines Verarbeitungsmusters einer Tasten-Eingabe für jedes der Pop-up-Fenster (S100) zu einer Entwicklungszeit,
wobei die Priorität einen Wert bedeutet, der eine Rangordnung eines Pop-up-Fensters über das andere Pop-up-Fenster bestimmt, ein Pop-up-Fenster mit einer höheren Priorität ein Vorrecht zum Verbrauchen einer Tasten-Eingabe hat,
gefolgt von den Schritten:
Abrufen eines bestimmten Pop-up-Fensters von einem Benutzerschnittstellenmanager durch eine Anwendung, die gegenwärtig auszuführen ist, und
wenn eine Tasten-Eingabe von einem Benutzer über eine Eingabevorrichtung für das Fernsehgerät (S300) in einer Situation empfangen wird, in der zwei oder mehr Pop-up-Fenster auf dem Benutzerbildschirm angezeigt werden, Aufrufen des Tasten-Handlers des Pop-up-Fensters mit höherer Priorität basierend auf der Priorität der zwei oder mehr Pop-up-Fenster (S400), und
Verarbeiten einer Tasten-Eingabe von einem Benutzer basierend auf dem aufgerufenen Tasten-Handler (S500), wobei die Schichtung der auf dem Benutzerbildschirm anzuzeigenden Pop-up-Fenster basierend auf der Priorität unter Steuerung des Benutzerschnittstellenmanagers verwaltet wird.

## Revendications

1. Méthode de gestion de fenêtres d'incrustation affichées sur l'écran utilisateur dans un téléviseur, comprenant :
équiper un téléviseur d'un écran utilisateur,
prévoir un dispositif de saisie vers le téléviseur,
assigner une priorité et un gestionnaire de clés pour définir un modèle de traitement d'une saisie de clés pour chaque fenêtre d'incrustation (S100) à un moment choisi,
où la priorité signifie une valeur qui détermine le classement d'une fenêtre d'incrustation au-dessus de l'autre, une fenêtre d'incrustation avec une priorité plus élevée a un droit préférentiel pour utiliser une saisie de touche,
suivi par les étapes de :
retirer une certaine fenêtre d'incrustation d'un gestionnaire d'interface utilisateur par une application à exécuter couramment, et
quand une saisie de clés est reçue d'un utilisateur à travers un dispositif de saisie vers le téléviseur (S300) dans une situation où deux ou plusieurs fenêtres d'incrustation sont affichées sur l'écran utilisateur, appeler le gestionnaire de clés de la fenêtre d'incrustation ayant une priorité plus élevée sur la base de la priorité des deux fenêtres d'incrustation (S400) ou plus, et
traiter une saisie de clés d'un utilisateur sur la base du gestionnaire de clés appelé (S500),
où l'organisation en couches des fenêtres d'incrustation à afficher sur l'écran utilisateur est gérée sur la base de la priorité sous le contrôle du gestionnaire de l'interface utilisateur.
